# EUROPEAN PATENT APPLICATION

(11) **EP 4 641 785 A1**
(43) Date of publication of application: **29.10.2025**
(21) Application number: 25168021.1
(22) Date of filing: 02.04.2025
(51) Int. Cl.: H01M 50/204, H01M 50/249, H01M 50/209, B60L 50/60, B60K 1/04

(54) **COMPLEX-SHAPED BATTERY PACK**

(30) Priority: 12.04.2024 US 202463633595 P
(71) Applicant: Cummins, Inc., Columbus, Indiana 47201 (US)
(72) Inventor: Ringstad, John, Oregon, 53574 (US)
(74) Representative: Cleveland Scott York

(57) **Abstract**

An energy storage system may include a battery bay defining an installation design envelope. In addition, the energy storage system may include a plurality of batteries, each battery including: a casing designed to protect internal components of the battery, the casing defining an outer profile with a plurality of battery legs, including a first battery leg in a first orientation and a second battery leg in a second orientation different from the first orientation, where the second battery leg extends away from the first battery leg, and a set of battery cells arranged within the casing to form the outer profile. The energy storage system may include where the outer profiles of the plurality of batteries are configured to fit within the installation design envelope, and at least two of the batteries are mirrored across a longitudinal midplane of the installation design envelope such that the first battery legs of the mirrored batteries are positioned at opposite outboard sections of the installation design envelope.

## Description

### CROSS-REFERENCE TO RELATED APPLICATIONS

This application claims the benefit of U.S. Provisional Patent Application No. 63/633,595, filed on April 12, 2024, the entire disclosure of which is incorporated herein by reference.

### BACKGROUND

Certain battery packs such as for battery-electric or hybrid-electric vehicles are manufactured by placing multiple battery sub-packs, each with a plurality of modules connected to one another and mounted on a frame within an enclosure, where each battery module may include a plurality of battery cells. Battery Packs designed for commercial vehicles are generally installed next to the frame rails, between the frame rails or below the frame rails.

### SUMMARY

The disclosed battery systems, apparatus, and methods provide modular, space-efficient, and structurally integrated energy storage solutions for electrified vehicles. The battery pack design features a plurality of battery legs within a defined casing, which is shaped to conform to an installation design envelope within a battery bay. The battery pack geometry, including L-shaped, double L-shaped, and stepped-profile configurations, enables optimized spatial utilization, ensuring that batteries are arranged in a mirrored configuration across a longitudinal midplane of the vehicle's chassis. This arrangement positions the first legs of both battery packs at opposite outboard sections of the design envelope, promoting balanced weight distribution and structural integrity.

The battery pack architecture is designed to be removably installed within the battery bay, allowing for serviceability and modular replacement. In some implementations, the battery and a second mirrored battery share at least one or multiple common planes, further optimizing structural integration and energy density within the available chassis space. The battery pack is defined within a rectangular coordinate system, where the dimensions of the secondary battery leg are constrained within either the vertical or longitudinal directions, ensuring compatibility with standardized vehicle layouts. The disclosed battery packs include attachment features that enable secure mounting to frame rails, enhancing mechanical stability and crash safety.

The installation method for these battery packs follows a structured approach. First, the battery bay is accessed, providing clearance for battery placement within the design envelope. The first battery is then installed at one side of the battery bay, after which the opposite side is accessed for the placement of the second mirrored battery. This method allows for modular vehicle assembly, reducing installation complexity while ensuring consistent alignment of mirrored battery modules.

In addition to the L- and double L-shaped configurations, the disclosed battery architectures can be adapted to alternative shapes, including U-shaped configurations or other geometrically optimized forms. These modifications allow engineers and manufacturers to adjust the pack design to different vehicle architectures while maintaining consistent performance and thermal management principles.

The manufacturing process for the battery packs involves arranging a set of battery cells within a protective casing, ensuring the outer profile conforms to the installation design envelope. The battery cells can be arranged in longitudinal or transverse orientations, depending on whether the application requires a narrower profile along frame rails or a wider underfloor installation. Additionally, battery cells can be stacked in multiple tiers, arranged vertically or horizontally, to maximize energy storage within height or volume constraints.

The disclosed energy storage system integrates multiple battery packs within a battery bay, ensuring a secure and optimized installation design envelope. This system leverages mirrored configurations across a longitudinal midplane, improving weight distribution and maximizing capacity utilization. The installation design envelope is specifically defined to conform to spaces along vehicle frame rails, allowing for seamless integration into commercial and passenger vehicle platforms. The mirrored battery arrangement enhances spatial efficiency, enabling manufacturers to achieve high energy density within a compact footprint while maintaining vehicle stability and structural performance.

These battery systems and methods offer scalable and adaptable energy storage solutions, accommodating various electrified vehicle designs while ensuring efficient installation, serviceability, and structural integration.

### BRIEF DESCRIPTION OF THE DRAWINGS

The above-mentioned and other features of this disclosure and the manner of obtaining them will become more apparent and the disclosure itself will be better understood by reference to the following description of embodiments of the present disclosure taken in conjunction with the accompanying drawings, wherein:
FIG. 1 shows a first configuration of a single L-shaped battery in a rectangular coordinate system.
FIG. 2 shows a second configuration of a single L-shaped battery in a rectangular coordinate system.
FIG. 3 shows a double L-shaped battery in a rectangular coordinate system.
FIG. 4A is an isolated, perspective view of a battery bay with a battery system having two batteries installed at two frame rails of a vehicle.
FIG. 4B is a side elevational view of the battery system in FIG. 4A.
FIG. 4C is a top elevational view of the battery system in FIG. 4A.
FIG. 5A is a perspective view of a multi-tiered battery pack.
FIG. 5B is a side elevation view of the battery pack in FIG. 5A.
FIG. 5C is a top elevation view of the battery pack in FIG. 5A.
FIG. 6 is an illustration of a battery and different cell arrangement options for the battery, according to principles of the present disclosure.
FIG. 7 is a flowchart of an example process.
FIG. 8 is a schematic diagram of a dual-axle multi-mode adjustable hybrid vehicle system featuring an integrated front axle, illustrating how power distribution between axles can enhance performance and energy efficiency.
FIG. 9 is a schematic diagram of an integrated axle, demonstrating a modular approach to vehicle drivetrain design, allowing for seamless integration of hybrid propulsion components.
FIG. 10 illustrates an alternative dual-axle multi-mode adjustable hybrid vehicle system with an integrated front axle, showcasing a different layout optimized for torque distribution and regenerative braking capabilities.
FIG. 11 is a schematic diagram of a three-axle multi-mode adjustable hybrid vehicle system incorporating an integrated front axle, extending the dual-axle concept to larger vehicles requiring additional traction and stability control.
FIG. 12 presents another three-axle multi-mode adjustable hybrid vehicle system, emphasizing scalability and adaptability to various powertrain configurations and vehicle applications.
FIG. 13 provides an additional example of a three-axle multi-mode adjustable hybrid vehicle system with an integrated front axle, further demonstrating the range of possible configurations that can be implemented using the disclosed hybrid drivetrain principles.
FIG. 14 is a schematic diagram of a controller operatively coupled with other system components, illustrating how electronic control systems manage power distribution, operational modes, and energy recovery within the hybrid vehicle system.

### DETAILED DESCRIPTION

In vehicle design, a standardized rectangular coordinate system is used to define the orientation of various components, including chassis rails and battery bays. This coordinate system consists of three primary axes: the transverse direction (X-axis), which runs from left to right across the vehicle's width; the longitudinal direction (Y-axis), which extends from the front to the rear along the vehicle's length; and the vertical direction (Z-axis), which measures height from the bottom to the top of the vehicle.

Battery packs in commercial vehicles are typically installed relative to the chassis rails, which run parallel to the longitudinal axis and provide the vehicle's main structural framework. The battery bay is the designated compartment for housing battery systems and may be positioned outside, between, or below the chassis rails, depending on the vehicle's design. The placement of battery packs within this coordinate system influences key factors such as weight distribution, serviceability, and spatial efficiency.

The L-shaped and double L-shaped battery packs introduced in this disclosure are specifically designed to integrate seamlessly within this coordinate system. The single L-shaped configuration supports side installation, while the double L-shaped design allows for a nested arrangement, maximizing energy storage without compromising ease of removal. These designs align with the transverse and vertical directions in relation to the chassis rails, allowing efficient packaging within the vehicle's energy storage envelope. The following figures illustrate the design, configuration, and installation process of these battery packs, emphasizing their space efficiency, modularity, and serviceability.

Battery Packs designed for commercial vehicles are generally installed next to the frame rails, between the frame rails, or below the frame rails. Different form factor battery packs can be mixed and matched to maximize the available space for energy efficiency. Options used in the past include multiple pack form factors used for different space claims. A desirable feature for integrators for certain vehicle types is a single pack side install and removal. This becomes difficult if a different pack is nested inside the frame rail as multiple different steps must be taken to install and access the nested pack.

Other approaches utilize an L- or U-shaped battery pack. An L-shaped battery pack works best when you have a cell that is specifically designed to make use of that form factor, and even then, the pack may be sub-optimal as the L shape generally does not allow for a single cell to utilize the space efficiently. A U-shaped pack is an option but violates the requirement for side install and removal. An optimal solution that meets all the requirements is a double L-shaped pack that takes advantage of pack nesting, which preserve an optimal cell form factor to be used and take advantage of a single pack part number. The double L shaped pack is highlighted in this disclosure along with some other example form factors according to principles of the present disclosure.

First considering the double L-shaped form factor, a single battery pack can form two separate "Ls" or "legs" when observed from different vantage points. First L Shape allows most of the battery pack to be on the side of the frame rail, but another portion to exist under the frame rail. Second L Shape allows the pack to exist on the right side of the frame rail and then a second pack rotate 180 degrees and sit on the other frame rail, with the smaller portion nested within the first pack. Other example form factors include single L-Shaped, U-Shaped, or independent differently sized battery packs. For a single L-shaped design, there is a specifically shaped cell to fully take advantage of the space available. For instance, two L-shaped packs can be installed and adjoined (e.g., next to or in contact with) under the frame rails, thereby forming a U shape. In another example, the single L-shaped pack can be made to fit outside of the frame rails and underneath the frame rails to be adjoined with another rectangular pack to form a U-shaped pack. In this regard, principles of the present disclosure can simulate a U-shaped pack fit without needing to be a U-shaped battery pack.

Without reference to any particular figure, elongated battery cells can be configured within a battery pack in either a longitudinal or transverse arrangement (or a combination of the two) to achieve a specific desired shape in terms of length, width, or height.

In a longitudinal configuration, the long axes of the cells align parallel to the length of the vehicle. This orientation results in a battery pack with a narrower width, as the cells are arranged in rows lengthwise. This is particularly suitable for installation scenarios where the pack must fit within elongated spaces, such as along the frame rails of a vehicle.

In a transverse configuration, the long axes of the cells are perpendicular to the vehicle's length, creating a wider pack. This arrangement may be beneficial when a shorter, wider form factor is needed, such as for underfloor battery installations.

To further adjust the shape of the pack, the cells can also be stacked in tiers, where layers of cells are placed one on top of the other (vertically or horizontally). This tiered approach enables the designer to optimize the pack's height to suit specific dimensional constraints. For example, a thinner battery pack may be created by limiting the number of tiers, while a higher-capacity pack can be achieved by stacking more tiers.

When all the cells in a battery module are arranged longitudinally, the module's width is minimized compared to a transverse arrangement, as the cells are aligned with the vehicle's length. Conversely, a transverse arrangement results in a greater width for the same number of cells, which may not be ideal for certain installation envelopes.

To maximize flexibility, multiple battery modules can be combined in adjacent configurations, with individual modules oriented either longitudinally or transversely. This modular approach allows the overall battery pack to fit within the available installation space, such as along the vehicle's frame rails or in other spatially constrained areas. By mixing orientations and stacking tiers as needed, manufacturers can efficiently utilize the available volume while meeting performance and capacity requirements. This flexibility ensures the battery pack aligns with both the physical constraints and functional demands of the vehicle.

Certain design constraints should be considered when designing such battery packs. U-shaped battery packs can get very large and do not allow installation and removal from a single direction. Usually there are two directions the pack must take to decouple from a vehicle. Independently sized packs can require multiple pack part numbers and multiple specific steps to be taken to install and remove them from the vehicle. Double L-Shaped battery packs provide a specific form factor maximizing the space efficiency on vehicle chassis, while allowing a side install and removal. The first L Shape maximizes efficiency in the second direction (below the frame rail), and the second L shape allows for a second pack to be nested within the first pack in a multiple pack configuration.

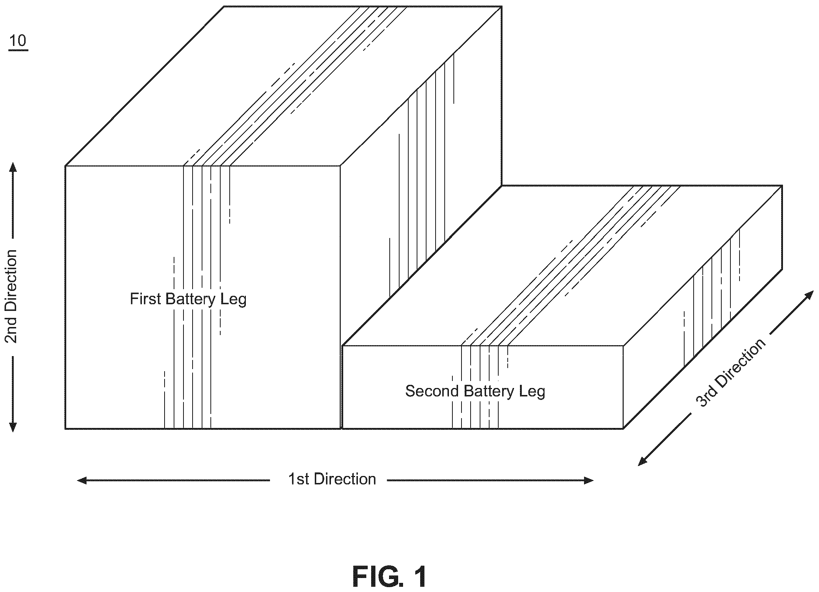

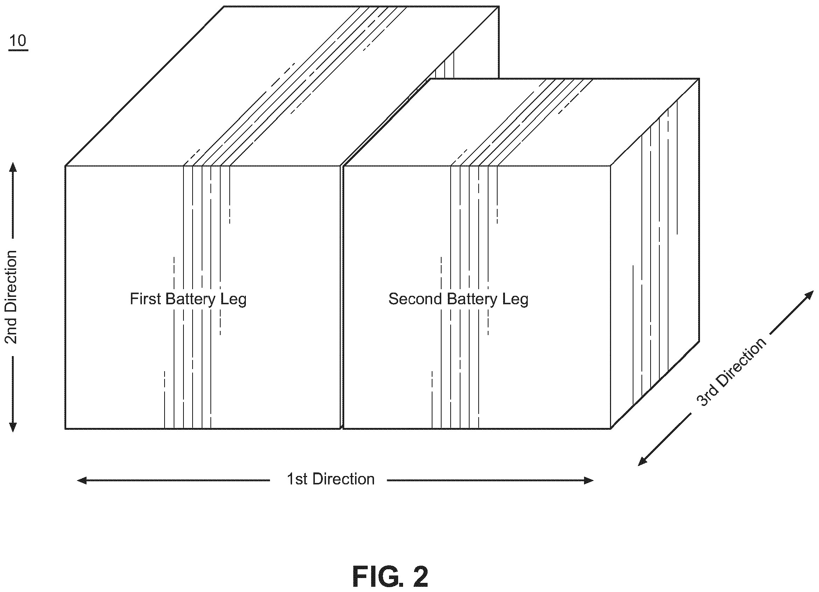

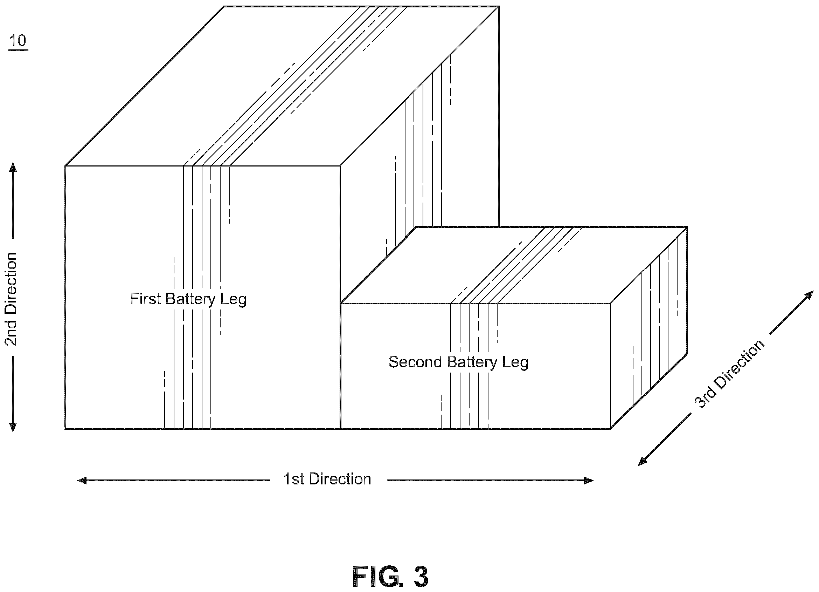

Now referring to the figures, FIGS. 1-3 show a diagram 10 of batteries according to principles of the present disclosure. In particular, FIG. 1 shows a first configuration of a single L-shaped battery in a rectangular coordinate system. FIG. 2 shows a second configuration of a single L-shaped battery in a rectangular coordinate system. And FIG. 3 shows a double L-shaped battery in a rectangular coordinate system. As can be seen across these figures, the battery is definable using a rectangular coordinate system including a first, transverse direction; a second, vertical direction; and a third, longitudinal direction. These are just some examples of the many examples disclosed herein and are not intended to be limiting in any way to the scope of this disclosure.

FIG. 1 shows an example diagram 10 where an extent of the second battery leg in the second, vertical direction is less than or equal to an extent of the first battery leg in the second, vertical direction. This figure depicts a single L-shaped battery pack arranged within the rectangular coordinate system. The first leg of the battery extends along the transverse direction, while the second leg extends vertically. To optimize space within the vehicle chassis, the extent of the second battery leg in the vertical direction is less than or equal to the first leg's vertical extent. This configuration is particularly useful for accommodating side mounting while ensuring a compact footprint that facilitates easy installation and removal.

FIG. 2 shows an example diagram 10 where an extent of the second battery leg in the third, longitudinal direction is less than or equal to an extent of the first battery leg in the third, longitudinal direction. An alternative single L-shaped battery configuration is shown in this figure, where the second battery leg extends in the longitudinal direction instead of the vertical direction. While the first leg still extends along the transverse axis, the second leg now follows the length of the vehicle. As in the first configuration, the extent of the second leg in the longitudinal direction is less than or equal to the first leg's longitudinal extent, ensuring compatibility with various vehicle layouts. This variation allows for greater flexibility when integrating battery systems into commercial vehicle designs, particularly in cases where length efficiency is a key consideration.

FIG. 3 shows an example diagram 10 where an extent of the second battery leg in both the second, vertical direction and third, longitudinal direction is less than or equal to an extent of the first battery leg in both the second, vertical direction and third, longitudinal direction. This figure presents a double L-shaped battery pack, consisting of two interlocking L-shaped battery modules. This design allows for increased energy storage while ensuring efficient installation and serviceability. The first L shape is designed for side mounting alongside the frame rail, while the second L shape is symmetrically rotated 180 degrees to nest within the first battery pack on the opposite frame rail.

The double L configuration offers several advantages, including optimal use of chassis space, standardization of form factors, and simplified installation/removal processes. This approach ensures efficient energy storage capacity while maintaining accessibility for maintenance. The nested design also helps maximize the available footprint within the battery bay, making it an effective solution for commercial vehicle electrification.

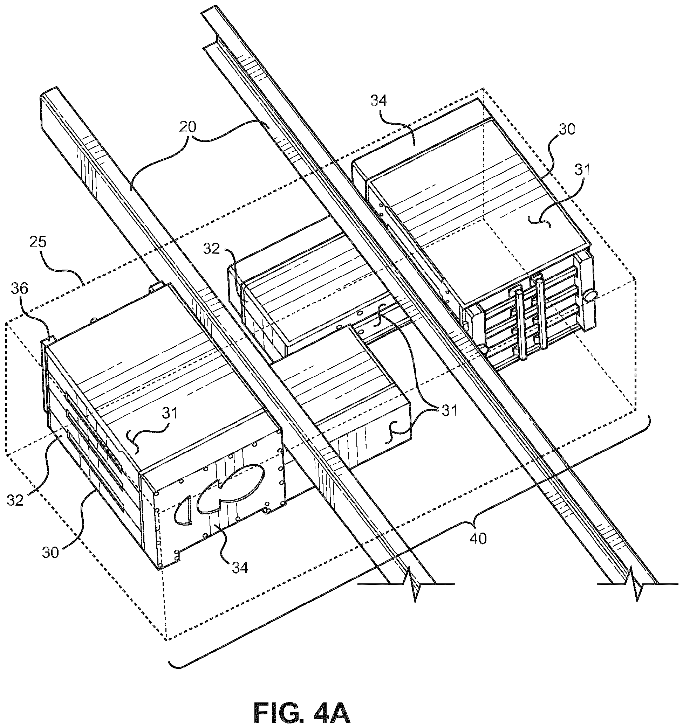

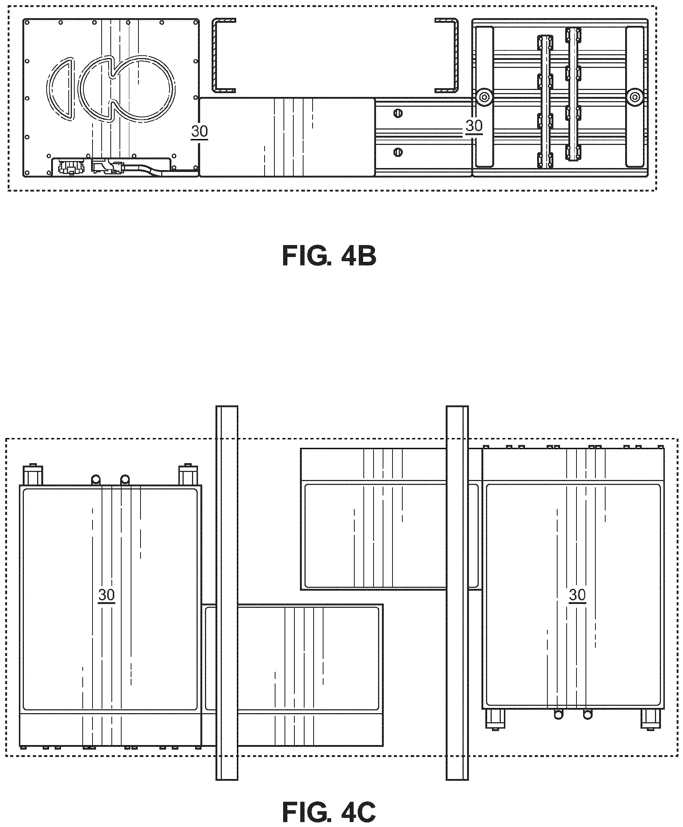

FIGS. 4A-4C show an example environment in which the batteries 30 (or battery packs 30) discussed above can be installed. In particular, FIG. 4A is an isolated, perspective view of a battery bay 25 with a battery system 30 (or battery assembly 30) having two batteries 30 installed at two frame rails 20 of a vehicle (not shown). Each of the batteries 30 are illustrated with a plurality of battery legs 31 and include battery tiers 32, electronic box 34 (or E-box 34), and manifold 36 (together referred to as a battery system 30 or a battery assembly 30). FIG. 4B is a side elevational view of the battery system 30 in FIG. 4A. And FIG. 4C is a top elevational view of the battery system 30 in FIG. 4A. Figures 4A-4C illustrate merely an example. One of ordinary skill in the art would recognize many variations, alternatives, and modifications. According to certain embodiments, the battery system 30 includes a battery housing and a mounting device (not shown). Although the above has been shown using a selected group of components for the battery assembly 30, there can be many alternatives, modifications, and variations. For example, some of the components may be expanded and/or combined. Other components may be inserted to those noted above. Depending upon the embodiment, the arrangement of components may be interchanged with others replaced.

In Figure 4A, a three-dimensional perspective view of a battery bay 25 shows how double L-shaped batteries 30 are installed along two frame rails 20. Each battery pack 30 is strategically placed either adjacent to or partially beneath the frame rails to optimize available space. The battery housing provides structural integrity and protection, while mounting devices ensure secure attachment to the vehicle frame.

In Figure 4B, a side elevation view illustrates the vertical positioning of the battery packs 30 and their mounting brackets. This perspective highlights the nested configuration, demonstrating how the second battery 30 is efficiently fitted within the footprint of the first to conserve space.

Figure 4C, a top-down view, showcases the symmetrical installation of the battery packs 30 along the frame rails. The layout ensures balanced weight distribution while leaving adequate clearance for cooling and electrical connections. This arrangement aligns with the vehicle's structural framework, enhancing stability and serviceability.

In some embodiments, a mounting device is configured to mechanically couple to a rail (e.g., chassis rail) in a vehicle. In certain embodiments, the mounting component is configured to mechanically couple to a rail (e.g., a chassis rail, a vehicle chassis rail) in a vehicle. In some embodiments, the mounting device allows side mounting of the battery assembly 30. In certain embodiments, side mounted batteries 30 enable simple vehicle attachment bracketry design and simple installation/removal access within the vehicle. In some embodiments, the mounting device can facilitate attachment/integration into vehicle. For example, the mounting device allows ease of service. In certain embodiments, the mounting device (e.g., side mount attachment), for example, attached to the battery housing, can increase usable volume in vehicle to package batteries 30 within, and facilitate (e.g., ease) battery-vehicle integration.

According to some embodiments, the mounting device includes one or more mounting components. In some embodiments, the mounting device includes a first mounting component and a second mounting component. In certain embodiments, the first mounting component is disposed proximate to the first battery 30 and the second mounting component is disposed proximate to the second battery 30. In some embodiments, the mounting device includes one or more mounting components disposed proximate to the second battery 30. In certain embodiments, the mounting component includes a sealing bracket and a mounting extension. In some embodiments, the mounting device is configured to mechanically couple to a rail (e.g., chassis rail) in a vehicle. In certain embodiments, one or more mounting components are configured to mechanically couple to a rail (e.g., chassis rail) in a vehicle. In some embodiments, the mounting device allows side mounting of the battery assembly 30 (e.g., a single or double L-shaped truck battery 30). In certain embodiments, side mounted batteries 30 enable simple vehicle attachment bracketry design and simple installation/removal access within the vehicle. In some embodiments, the mounting device can facilitate attachment/integration into vehicle. For example, the mounting device allows ease of service. In certain embodiments, the mounting device (e.g., side mount attachment), for example, attached to the battery housing (or casing), can increase usable volume in vehicle to package batteries 30 within, and facilitate (e.g., ease) battery-vehicle integration.

According to certain embodiments, the battery assembly set 40 includes one or more battery assemblies 30 using any of the embodiments disclosed herein (e.g., the battery assembly 30 in Figure 1). In some embodiments, each battery assembly 30 includes a power port, a communication port, and a cooling port. In certain embodiments, each battery assembly 30 can have a controller to be controlled and/or addressed individually. In some embodiments, the battery assembly set 40 includes one or more mounting devices to assemble to a vehicle chassis rail. In certain embodiments, the battery assembly set 40, including the two battery assemblies 30 are configured to mechanically couple to a vehicle chassis rail using one or more mounting devices. In some embodiments, each battery assembly 30 in the battery assembly set 40 includes a mounting device, for example, configured to mechanically couple to a vehicle chassis rail. In examples, these mounting devices can be similar to any known mounting devices (e.g., fasteners, brackets, and the like).

Installation methods for packs described herein can include accessing the battery bay 25 of the vehicle to provide access to the design envelope and installing the battery 30 into the battery bay 25. Implementations of the described techniques may include hardware, a method or process, or a computer tangible medium. Methods can include accessing a first side of the battery bay 25 to provide access to the design envelope, installing the battery 30 at the first side of the battery bay 25, accessing a second side of the battery bay 25 to provide access to the design envelope, and installing the second battery 30 at the second side of the battery bay 25.

As seen in these figures, the batteries 30 can be arranged (e.g., removably arranged) in a variety of manners within the design envelope, including to occupy only the inboard or outboard sections thereof. For instance, the second battery legs 31 of both the battery 30 and the second battery 30 are complementarily arrangeable relative to each other such that the second battery legs 31 of both the battery 30 and the second battery 30 are transversely juxtaposed to each other. The batteries 30 can share multiple (e.g., two or at least three) common planes in the design envelope. In examples, a third leg that forms a stepped outer profile with at least one battery leg 31 in the plurality of battery legs 31. In examples, no portion of the plurality of battery legs 31 occupies an inboard section of the design envelope. In examples, the second battery legs 31 of both the battery 30 and the second battery 30 are arrangeable relative to each other at an inboard section of the design envelope to occupy a portion (e.g., all, a majority, or some fraction) of the inboard section.

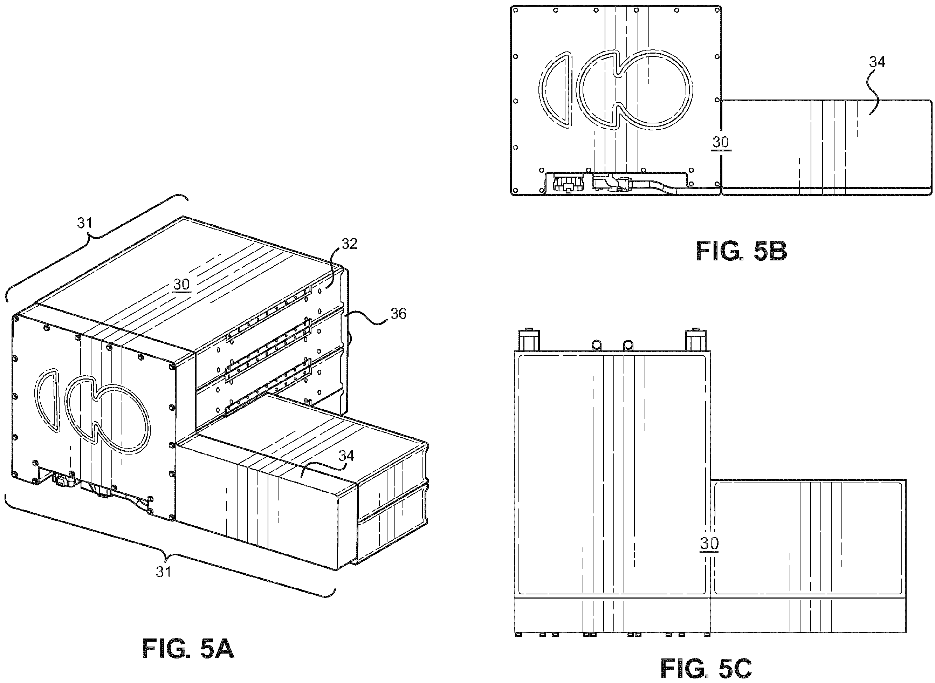

FIGS. 5A-5C show example battery packs with one or more tiers flanked on opposing sides by an electric box (or E-box) and a cooling manifold. In particular, FIG. 5A is a perspective view of a multi-tiered battery pack. FIG. 5B is a side elevation view of the battery pack in FIG. 5A. And FIG. 5C is a top elevation view of the battery pack in FIG. 5A.

These figures introduce a multi-tiered battery pack design, which incorporates stacked tiers of battery cells to optimize space and thermal management.

Figure 5A, a perspective view, displays a multi-tiered battery pack with an electric control box (E-box) and a cooling manifold. The stacked tiers are designed to provide higher energy density while maintaining a compact footprint. Integrated cooling plates between tiers enhance thermal regulation.

In Figure 5B, a side elevation view illustrates the vertical stacking of battery tiers. Each tier is separated by cooling plates, which help dissipate heat and maintain safe operating temperatures. The structural frame ensures stability and durability, preventing excessive vibrations that could degrade battery performance.

Figure 5C, a top elevation view, highlights the horizontal arrangement of the battery tiers. This layout shows the positioning of the cooling manifold and E-box, demonstrating how modular battery stacking can be adapted for different commercial vehicle configurations.

The multi-tiered battery pack is constructed using a three-step process to ensure structural integrity, effective cooling, and modularity.

Tier Assembly (Process 1) - In this phase, battery tiers are built using an open-frame approach, which simplifies the manufacturing process. Cells are stacked within the frame from front to rear, with structural adhesives and electrical connections applied between layers. The lateral structural members are then secured to the assembly using welded or bolted connections, forming an enclosed structure.

Stacking and Cooling Plate Integration (Process 2) - Once individual tiers are assembled, they are stacked vertically with cooling plates placed between each tier. These plates help regulate temperature and prevent overheating. The process follows a sequence of thermal interface material application, tier stacking, and cooling plate placement to ensure uniform cooling efficiency.

Final Tier Clamping and Structural Assembly (Process 3) - In the final phase, the stacked tiers are secured together using bolted or welded connections. Additional structural elements are installed to reinforce the middle section of the battery pack, ensuring it remains stable and resistant to mechanical stresses.

This tiered construction method results in a safer, more reliable battery system with improved thermal management and durability, making it well-suited for commercial electric vehicles.

In more detail, the battery pack can have a modular construction between sections. Details about the construction of those sections will now be discussed. Manufacturing the middle section can be divided into 3 main processes. Process 1 includes a tier assembly process. Process 2 includes stacking multiple tiers (if required) and assembling the cooling plates. Process 3 includes clamping the tiers together as a single enclosure. After assembled, other sections can be attached to the middle section.

During process 1, tiers of the battery pack are assembled. This process leverages an open frame approach, which leads to a simple and less complex design and manufacturing process. Such a process can include stacking all the cells starting either from a rear or front structural member to build the pack tier / layer. Starting from the front or rear structural member, the tier assembly process includes adding consecutive layers of structural adhesives and cells until the full battery pack tier assembly is completed. The number of cells may vary depending on the pack application. Front or rear structural members can be positioned in place to sandwich combinations of cells and adhesives (e.g., rear structural member, adhesive1, cell 1, adhesive 2, cell 2, adhesive 3, cell N, adhesive N, front structural member). After the battery pack tier is assembled and secured in place by manufacturing jigs and fixtures either by applying or not applying a compression force to the pack tier, the high voltage current carriers and low voltage harness can be assembled to the Pack tier by using welded or bolted connections. After this step is completed, the lateral structural members (left and right) can be assembled to the pack tier by welded or bolted connection closing the tier and completing the enclosure assembly. At this point, manufacturing jigs and fixtures can be released.

During process 2, cooling plates are fitted between cells and/or tiers. The tiers are stacked in the pack to have cooling plates in between the tiers in addition to the cooling plate at the bottom and top of the final tier stack. Sequential steps include positioning the bottom cooling plate, dispensing thermal interface material and / or structural adhesive, first tier, dispensing thermal interface material and / or structural adhesive, second tier, dispensing thermal interface material and / or structural adhesive, Nth tier, dispensing thermal interface material and / or structural adhesive, top cooling plate. Note that all cooling connections of the cooling plate are outside the tier enclosure. In case of any connection cooling leakage, the coolant leaks outside the pack enclosure and not inside which provides a more robust and safe pack.

During process 3, tiers are secured together either by bolted or welded connections. At the completion of this this process the middle section assembly is completed.

Overall, from this construction, it can be seen that an open frame provides a simpler design and manufacturing process. This is due in part to the frame being used as part of the assembly and also as a tool to secure the cell stack. There is no need for a separate assembly line to build frames or cell stacks, or modules. The open frame can consist of either die casting parts, extruded or stamped parts welded or bolted together as part of the manufacturing assembly process. The open frame can also be pre-assembled as a closed frame. The rear structural member has the cooling manifold (used to connect the cooling plates and manage the flow distribution through integrated orifices in between the tiers) integrated to it combining structural, cooling and sealing functions. This reduces the number of components required while improving packaging and cost. This is a competitive advantage. While delivering a high performance TMS, this design approach also preserves the simplicity of bottom cooling approach delivering a simple, robust and cost-effective design. The multi-tier middle section with cooling plates at the bottom and at the top of the tiers (cell is cooled on both sides) delivers a high-performance TMS. This feature maximizes thermal performance of the cells (cooling mode and heating mode), providing better performance and extended life for the cells and battery pack.

Manufacturing the front section of the pack (e.g., the E-Box) can be done as a subassembly and/or in parallel with manufacturing the middle section. Parallel manufacturing minimizes overall manufacturing time while reducing manufacturing footprint and capital investment required. The E-Box assembly consists of placing and fixing all electrical and control components inside including components including battery pack controller, cell supervisory circuits, contactors, fuses, high voltage and low voltage current carriers, contactors, connectors, Manual Service Disconnect ("MSD") and other auxiliary components as required for the electrical circuit. The E-Box can be manufactures out of a die casting of stamped and welded components. The E-Box has the benefit of flexible location for the high voltage and low voltage connectors and MSD, which improves the vehicle integration providing more flexibility for the OEMS. The E-Box also improves the overall serviceability of the Pack as all serviceable components are assessable through the E-Box with also the possibility of removing the entire E-Box and service the components outside the vehicle.

Final assembly of the Battery Pack includes the middle section with the E-Box and assembling the venting collector devices on the rear of the pack. This completes the assemble process. The multi-tier pack provides a safer pack with better thermal propagation behavior by having the tiers isolated from each other. In case of a cell venting, all the venting gasses are directed through the sides of pack into the venting collector on the rear of the pack without interacting with the cells in the other tiers. This offers additional protection by preventing thermal propagation from one tier to another.

In more detail, the open-frame battery system incorporates a modular architecture that facilitates efficient thermal management, electrical integration, and structural durability. This system is composed of three primary components: the stack of battery tiers, which forms the core energy storage unit; the electrical box (E-box), which houses power management and control electronics; and the cooling manifold, which regulates temperature across the battery assembly. Each of these components is designed to function independently while maintaining seamless integration within the battery pack, allowing for a structured assembly process, streamlined maintenance, and adaptability to various vehicle architectures. The design approach supports scalability and serviceability, reducing complexity in both manufacturing and field operations.

The stack of battery tiers serves as the foundational energy storage structure within the battery pack. Each tier consists of multiple battery cells arranged to achieve the desired voltage and capacity characteristics. The cells are enclosed within structural members, such as side rails, endplates, and compression elements, which provide mechanical stability and containment. The stacking approach follows a modular framework, where each tier is assembled with thermal interface materials and cooling plates positioned between them to facilitate heat dissipation and uniform temperature control. This layered structure allows for precise alignment of electrical connections, ensuring effective current flow and power distribution across the pack. The open-frame construction provides a defined mounting structure, allowing for secure fastening of the tiers while permitting customization in height and overall capacity based on vehicle design requirements. By integrating a standardized tier format, the battery system can be adapted for different applications, including passenger vehicles, commercial trucks, and stationary energy storage solutions.

The electrical box (E-box) is an independent module that houses high-voltage and low-voltage power electronics, battery management components, and safety mechanisms. Unlike systems where control electronics are embedded directly within the cell stack, the E-box is designed as a separate enclosure, allowing for improved accessibility and thermal isolation from the battery cells. The E-box includes critical functional elements such as the battery pack controller, which manages cell balancing, voltage regulation, and fault detection. Additional components include cell supervisory circuits that continuously monitor cell voltages and temperatures, ensuring operation within specified parameters. The E-box also integrates contactors and fuses that facilitate circuit protection and system isolation, providing necessary safeguards in the event of an electrical fault. A manual service disconnect (MSD) is incorporated into the E-box design, allowing for safe disconnection of the battery pack from the vehicle power system during maintenance or emergency scenarios. The E-box is designed for attachment to the battery pack via structural fasteners, ensuring a secure yet removable connection. This modular placement simplifies servicing by enabling independent troubleshooting and replacement of electrical components without requiring full disassembly of the battery pack. The E-box design allows for flexible integration, enabling vehicle manufacturers to position electrical interfaces in locations that best suit their chassis layout and service access points.

The cooling manifold is a dedicated thermal management component responsible for regulating temperature within the battery pack. It is designed to interface directly with the cooling plates positioned between battery tiers, ensuring uniform heat extraction from the cell surfaces. The manifold incorporates internal coolant distribution channels that direct fluid flow through vertical passageways, allowing it to reach each cooling plate efficiently. A flow-balancing mechanism is integrated into the manifold design to regulate coolant distribution, ensuring consistent thermal performance across all tiers. This approach prevents localized overheating and maintains an even thermal gradient, which is essential for preserving cell longevity and performance stability. The cooling manifold also includes vent gas collection pathways, which channel any released gases from battery cells away from the pack enclosure, reducing the risk of thermal propagation. This design consideration enhances both safety and thermal efficiency, contributing to the overall reliability of the battery system.

The integration of the stack of battery tiers, E-box, and cooling manifold follows a structured assembly process that ensures each component is installed efficiently while maintaining system integrity. The process begins with the assembly of the battery tiers, where individual modules are aligned and fastened within the open-frame structure using reinforced side rails and endplates. Cooling plates and thermal interface materials are then positioned between tiers, followed by the installation of the cooling manifold, which is secured to the battery pack structure. Once the thermal system is in place, the E-box is attached, establishing electrical communication between the control system and the battery cells through dedicated high-voltage and low-voltage interfaces. The final assembly stage includes quality control measures, such as leak testing, electrical validation, and thermal performance assessments, ensuring that the battery system meets operational requirements before deployment.

By designing these components as independent yet interdependent modules, the open-frame battery system provides a scalable, serviceable, and thermally optimized energy storage solution. This design approach supports various applications, including electric and hybrid vehicles, as well as stationary energy storage systems, while facilitating efficient production, field serviceability, and long-term reliability.

Various functions and methods disclosed herein can be performed by a processor executing instructions that are stored on a computer-readable medium. For instance, a non-transitory computer-readable medium storing a set of instructions for assembling a cell-to-pack battery pack. The battery pack can be similar to those discussed herein.

Without reference to any particular figure, it is acknowledged that different external enclosures or casings for battery packs can be useful and customizable to different applications. For instance, such casings can be ruggedized and easily manufactured while improving shock, vibration, low temperature performance, accommodation of cell swelling, cost effectiveness, and the like. On the other hand, a battery pack employing principles of the present disclosure can include encapsulated battery cells without any additional external enclosure. In such an embodiment, an encapsulant can form at least a portion of the exterior surface of the battery pack. Further, disclosed are examples in which the encapsulant fully encapsulates the battery cells (e.g., with the electrode leads of the cells extending through the encapsulant are also described). Further still, examples in which the battery cells are at least partially encapsulated and are located within a rigid outer housing are also detailed herein. This housing in some examples can be filled with encapsulant. While any appropriate material may be used as an encapsulant, appropriate encapsulants include but are not limited to elastomers (e.g., silicones), epoxies, and/or any other appropriate material. In one specific embodiment, an encapsulant is a flexible polyurethane/polyurea blend. And in any of these instances where the battery cells are encapsulated, the display can be integrated into the encapsulation. Contemplated, however, are embodiments where the display is freestanding.

The examples described herein may refer to cell module assemblies and/or battery packs. However, it should be understood that these terms may be used interchangeably in the various examples to refer to a grouping of one or more electrically interconnected electrochemical cells.

As used herein, terms electrochemical cells, cells, and similar terms are meant to refer to individual battery cells such as coin cells, prismatic cells of various shape, jelly roll cells, pouch cells, or any other appropriate electrochemical device capable of acting as a battery. Additionally, a pouch cell, electrochemical pouch cell, and other similar terms are meant to refer to cells that include a deformable outer layer that typically includes layers of laminated polymers and metal foils surrounding an internal electrode stack or roll. Typically, pouch cells include larger flat opposing front and back surfaces and smaller side surfaces. Further, when forming stacks of pouch cells, the flat surfaces are typically stacked one on top of the other. However, certain examples may use multiple adjacent cell stacks where the cells are either in series and/or in parallel. In certain embodiments, other ways of arranging the cells may also be employed.

Non-limiting examples of various battery pack configurations and arrangements noted above include battery pack with a battery management unit and/or other associated electronics that provide various types of desired functionality. For instance, such battery packs include a plurality of battery modules electrically connected in series and/or parallel to achieve the target pack voltage. A battery management system monitors the voltage and current and manages overall operation of the battery pack. Each battery module comprises a plurality of battery cells electrically connected in series and/or parallel. Each battery module includes a battery management unit which monitors and manages charge and discharge of the cells in that module.

Although not illustrated or discussed exhaustively herein, one skilled in the art will appreciate that each battery management unit can include various sensors for facilitating serviceability and usability functions discussed elsewhere herein. For instance, voltage sensors can sense the voltages of individual cells or groups of cells. Each battery management unit may also include one or more temperature and/or pressure sensors which sense the temperature and/or pressure of the module and/or individual cells or groups of cells. The battery management system communicates with the battery management unit in each of the modules to monitor and manage overall operation of the battery pack. The battery management system and each of the battery management units include a processor with the appropriate software, along with memory and other components, which are used to monitor and manage charge and discharge. For example, in certain examples, a battery management unit may include circuitry that expands the number of cells for which the battery management unit may perform cell voltage sensing and balancing. In certain examples, the battery management unit may include overvoltage protection monitoring and interlock functionality. Additionally, a battery management unit may include circuitry and/or be programmed to implement a method of active and standby power supply adaption that provides lower active power dissipation. A battery management unit may also include external Flash Memory for more secure program bootloading. Of course, in certain examples battery management units may include combinations of the above noted functionalities and/or different functionalities.

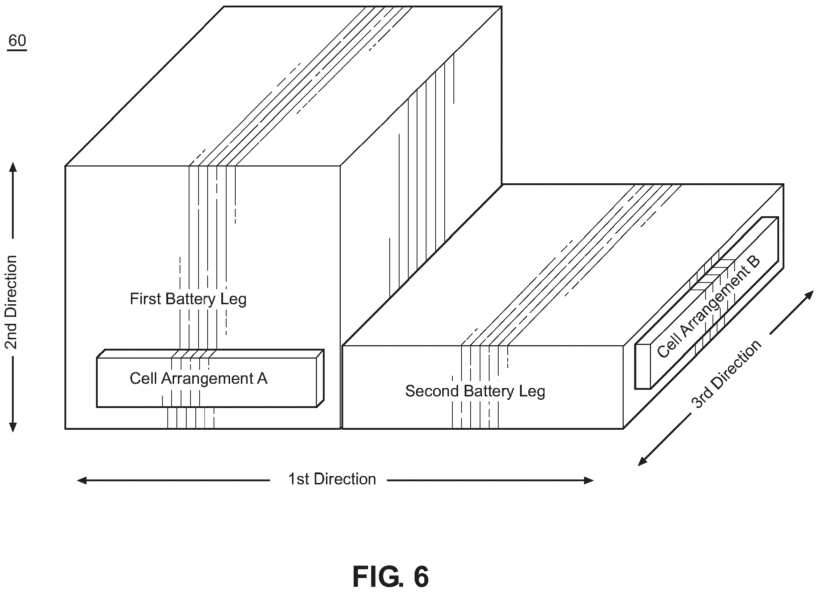

FIG. 6 is a second diagram 60 of a battery and different cell arrangement options for the battery, according to principles of the present disclosure. The battery shown here can be similar to any of the batteries discussed elsewhere herein, including the battery 30. Cell arrangement A shown here can correspond to a longitudinal configuration of the battery cells, which can extend to either or both of the first and second legs. Cell arrangement B shown here can correspond to a transverse configuration of the battery cells, which can extend to either or both of the first and second legs.

FIG. 6 illustrates different battery cell arrangement configurations within the L-shaped and double L-shaped battery packs, demonstrating how the internal layout can be adjusted to optimize energy storage capacity, cooling efficiency, and space utilization. The two primary configurations presented are longitudinal and transverse arrangements, which can be used individually or in combination to best fit the installation constraints of a vehicle.

In Cell Arrangement A, the battery cells are aligned in a longitudinal orientation, meaning their long axes run parallel to the vehicle's length. This layout results in a narrower battery pack, which is well-suited for placement along the chassis rails, where space is more restricted in width but available in length. The longitudinal orientation enables a streamlined form factor that facilitates integration into elongated battery bays while minimizing the pack's width. This approach is particularly effective for vehicles that require high-capacity battery storage within narrow compartments, ensuring that energy density is optimized along the vehicle's longitudinal axis.

In Cell Arrangement B, the battery cells are positioned in a transverse orientation, where the long axes of the cells are perpendicular to the vehicle's length. This configuration creates a wider, shorter battery pack, making it ideal for underfloor installations or applications where space constraints limit length but allow for greater width. The transverse arrangement increases cross-sectional energy density, allowing more cells to be placed side by side, which can be beneficial for improving power output and thermal dissipation.

Both arrangements offer flexibility in battery design, and manufacturers can implement a combination of longitudinal and transverse orientations within different sections of the battery pack. This modular approach enables battery packs to be customized for specific vehicle applications, ensuring that available space is used efficiently without compromising thermal management, weight distribution, or serviceability. The ability to stack tiers while incorporating longitudinal and transverse configurations further enhances the adaptability of these battery packs for a variety of commercial electric vehicle platforms.

Elongated battery cells can be configured within a battery pack in either a longitudinal or transverse arrangement (or a combination of the two) to achieve a specific desired shape in terms of length, width, or height. In a longitudinal configuration, the long axes of the cells align parallel to the length of the vehicle. This orientation results in a battery pack with a narrower width, as the cells are arranged in rows lengthwise. This is particularly suitable for installation scenarios where the pack must fit within elongated spaces, such as along the frame rails (or chassis rails) of a vehicle. In a transverse configuration, the long axes of the cells are perpendicular to the vehicle's length, creating a wider pack. This arrangement may be beneficial when a shorter, wider form factor is needed, such as for underfloor battery installations.

In some installations, a combination of Cell Arrangements A and B can be utilized to achieve optimal space efficiency and energy storage capacity. By integrating both longitudinal and transverse configurations, battery pack designers can create customized form factors that conform to the unique spatial constraints of a vehicle's battery bay.

One possible approach is to position longitudinally arranged cells (Arrangement A) in sections where space is available along the frame rails, allowing the pack to extend lengthwise without increasing width. This can be advantageous in vehicles where side-mounted batteries need to fit within a constrained width while maximizing storage along the vehicle's length.

Conversely, transversely arranged cells (Arrangement B) can be placed in areas with greater lateral space, such as beneath the vehicle's floor or in broader sections of the battery bay. This helps increase the overall energy storage without extending too far into the vehicle's length.

Additionally, a tiered approach can be implemented, where lower tiers of the battery pack use longitudinal cell arrangements for structural efficiency, while upper tiers incorporate transverse arrangements to make full use of vertical space. This hybrid approach provides greater flexibility in accommodating cooling components, electronic modules, and structural reinforcements.

By mixing and matching these arrangements within a single battery system, manufacturers can maximize energy density while maintaining modularity, ensuring that the battery pack is optimized for both vehicle performance and serviceability. This adaptive design methodology allows electric vehicle manufacturers to tailor battery configurations to different commercial vehicle applications, providing a balance between capacity, cooling efficiency, and spatial constraints.

To further adjust the shape of the pack, the cells can also be stacked in tiers, where layers of cells are placed one on top of the other (vertically or horizontally). This tiered approach enables the designer to optimize the pack's height to suit specific dimensional constraints. For example, a thinner battery pack may be created by limiting the number of tiers, while a higher-capacity pack can be achieved by stacking more tiers. When all the cells in a battery module are arranged longitudinally, the module's width is minimized compared to a transverse arrangement, as the cells are aligned with the vehicle's length. Conversely, a transverse arrangement results in a greater width for the same number of cells, which may not be ideal for certain installation envelopes. To maximize flexibility, multiple battery modules can be combined in adjacent configurations, with individual modules oriented either longitudinally or transversely. This modular approach allows the overall battery pack to fit within the available installation space, such as along the vehicle's frame rails or in other spatially constrained areas. By mixing orientations and stacking tiers as needed, manufacturers can efficiently utilize the available volume while meeting performance and capacity requirements. This flexibility ensures the battery pack aligns with both the physical constraints and functional demands of the vehicle.

The tiering process enhances the flexibility of combining longitudinal and transverse cell arrangements, enabling a structured approach to space utilization, structural support, and thermal management within a battery pack. The three-tiered assembly process, described in Figures 5A-5C, allows designers to arrange different cell orientations across multiple tiers, optimizing the installation footprint and energy storage configuration within a vehicle. This approach supports commercial vehicle battery pack design, where available space, cooling requirements, and structural integrity influence battery module placement. By organizing longitudinal and transverse cell configurations across different layers, the battery pack can be adapted to specific vehicle design constraints while managing weight distribution, serviceability, and thermal performance.

The first stage of the tiering process, Tier Assembly (Process 1), establishes structural stability by assigning longitudinally arranged cells (Arrangement A) to the lower tiers of the battery pack. This design aligns with the chassis rails, forming a stable base that improves weight distribution along the vehicle's structural frame. By positioning higher-mass cells along the longitudinal axis, lateral forces and vibrations can be managed to reduce structural stress and improve vehicle handling characteristics.

The second stage, Stacking and Cooling Plate Integration (Process 2), focuses on thermal regulation by integrating cooling plates between the stacked tiers. This stage accommodates longitudinal configurations, where coolant pathways follow the chassis rails, allowing for consistent cooling flow along the length of the pack. In contrast, transversely arranged cells (Arrangement B) are placed in upper tiers, where broader cooling surfaces allow for distributed heat dissipation across a wider area. By positioning cooling elements between layers, the battery system regulates internal temperatures, improving charge and discharge efficiency and maintaining stable thermal performance under operational conditions.

The final stage, Final Tier Clamping and Structural Assembly (Process 3), completes the structural enclosure by securing the stacked tiers into a unified assembly. This process allows for modular scalability, supporting adaptation to various vehicle architectures. By placing longitudinal cells in lower tiers for foundational stability and transverse cells in upper tiers for space optimization, the battery pack design is adapted to installation requirements while maintaining cooling efficiency and ease of access for servicing. Additionally, this design approach enables efficient integration into vehicle assembly processes, supporting straightforward installation and maintenance.

The ability to arrange longitudinal and transverse cell orientations across multiple tiers provides several functional benefits in vehicle applications. Space utilization is optimized by aligning the battery pack with available installation compartments, allowing integration within chassis rail structures and underfloor spaces. Thermal performance is maintained through dedicated cooling pathways, designed to support longitudinal and transverse cell orientations, providing consistent heat management.

Additionally, structural integrity is preserved, as tiered and mixed configurations distribute weight efficiently and minimize vibration impact, supporting durability in commercial vehicle applications. The modular framework of this battery architecture enables scalability, allowing manufacturers to adjust pack configurations for different vehicle models and storage needs.

By integrating tiering with mixed cell arrangements, battery pack designs can support energy density requirements, cooling efficiency, and structural performance. This approach aligns with performance, safety, and longevity requirements for commercial electric vehicles, ensuring that battery systems integrate efficiently into vehicle platforms while maintaining serviceability and operational reliability.

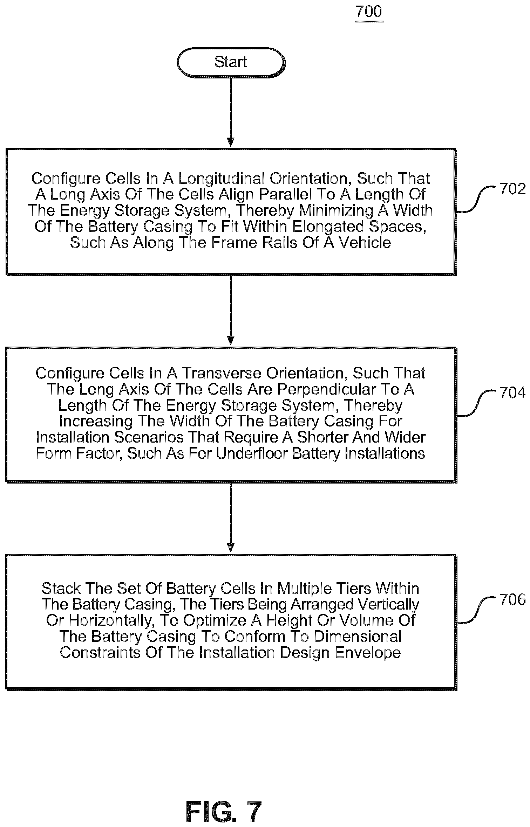

FIG. 7 is a flowchart of an example process 700. In some implementations, one or more process blocks of FIG. 7 may be performed by an apparatus.

Process 700 may include additional implementations, such as any single implementation or any combination of implementations described below and/or in connection with one or more other processes described elsewhere herein. In a first implementation, arranging the set of battery cells includes configuring the cells in a longitudinal orientation, such that a long axes of the cells align parallel to a length of the energy storage system, thereby minimizing a width of the battery casing to fit within elongated spaces, such as along the frame rails of a vehicle.

In a second implementation, alone or in combination with the first implementation, arranging the set of battery cells includes configuring the cells in a transverse orientation, such that the long axes of the cells are perpendicular to a length of the energy storage system, thereby increasing the width of the battery casing for installation scenarios that require a shorter and wider form factor, such as for underfloor battery installations.

A third implementation, alone or in combination with the first and second implementation, process 700 may include stacking the set of battery cells in multiple tiers within the battery casing, the tiers being arranged vertically or horizontally, to optimize a height or volume of the battery casing to conform to dimensional constraints of the installation design envelope.

Although FIG. 7 shows example blocks of process 700, in some implementations, process 700 may include additional blocks, fewer blocks, different blocks, or differently arranged blocks than those depicted in FIG. 7. Additionally, or alternatively, two or more of the blocks of process 700 may be performed in parallel.

It is well understood that methods that include one or more steps, the order listed is not a limitation of the claim unless there are explicit or implicit statements to the contrary in the specification or claim itself. It is also well settled that the illustrated methods are just some examples of many examples disclosed, and certain steps can be added or omitted without departing from the scope of this disclosure. Such steps can include incorporating devices, systems, or methods or components thereof as well as what is well understood, routine, and conventional in the art.

The following figures illustrate various multi-mode adjustable hybrid vehicle system configurations, showcasing different approaches to power distribution, drivetrain integration, and scalability. These configurations leverage integrated electric axles to enhance energy efficiency, torque management, and regenerative braking capabilities. The diagrams provide detailed schematics of both dual-axle and three-axle systems, demonstrating how hybrid powertrain components can be modularly implemented across different vehicle architectures. Additionally, the figures highlight the role of electronic control systems in managing energy flow, mode transitions, and system optimization, ensuring seamless operation across various driving conditions. These configurations illustrate how the disclosed hybrid drivetrain solutions can be adapted to meet the performance, efficiency, and flexibility requirements of electrified vehicle applications.

The disclosed multi-mode adjustable hybrid vehicle system configurations can be adapted for a broad range of electrified vehicle architectures, including full battery electric vehicles (BEVs) as well as various hybrid configurations, such as parallel hybrids, non-parallel hybrids, and range-extended electric vehicles (REEVs). While the figures primarily illustrate hybridized powertrain systems featuring integrated electric axles, the same principles of power distribution, modular integration, and electronic control can be applied to fully electric drivetrains, where all motive power is supplied by battery-electric propulsion systems. In parallel hybrid configurations, the engine and electric motor work in tandem, with control strategies optimized to balance fuel efficiency and electric power utilization. In non-parallel or series hybrid configurations, the engine operates primarily as a generator, supplying energy to drive electric propulsion systems or recharge the onboard battery pack. Similarly, range-extended electric vehicles (REEVs) can incorporate these power management principles to optimize energy efficiency, regenerative braking, and real-time torque distribution while maintaining the ability to rely on an auxiliary power source for extended range capabilities. These adaptable configurations ensure that electrified vehicle platforms can be tailored to meet specific operational requirements, efficiency goals, and performance demands across a variety of vehicle types and applications.

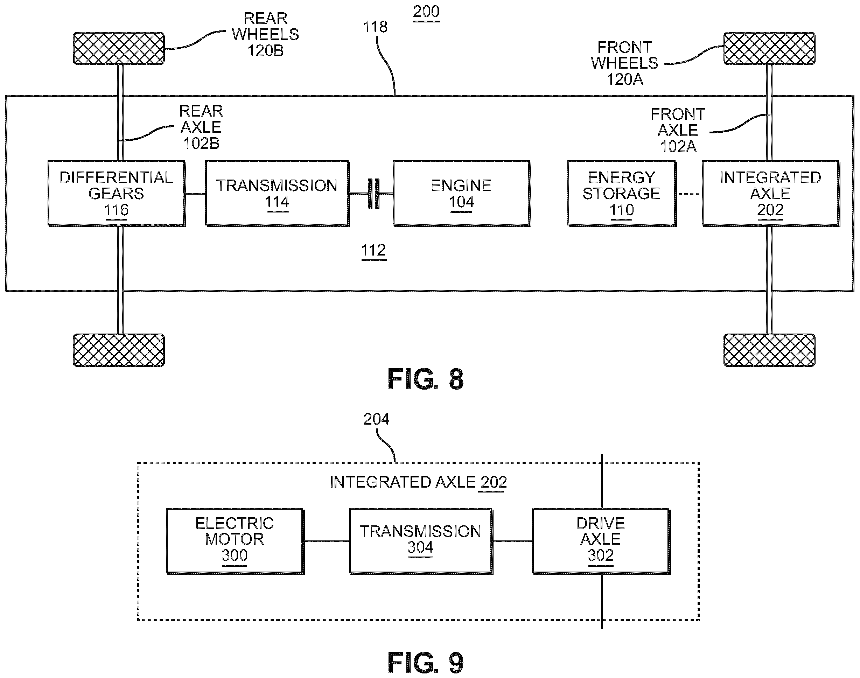

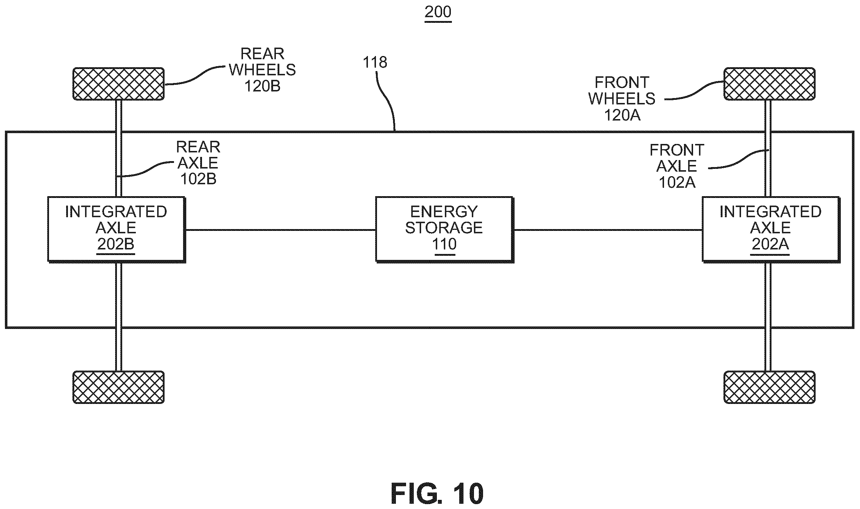

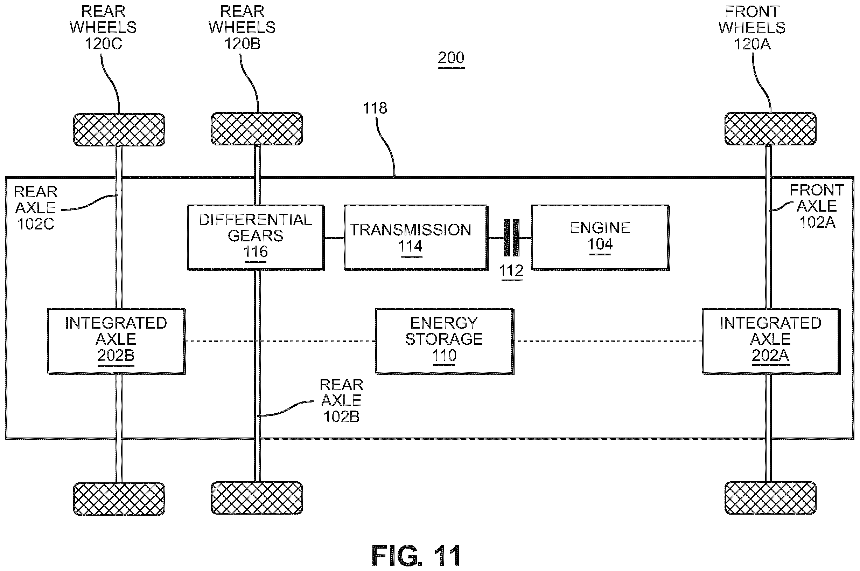

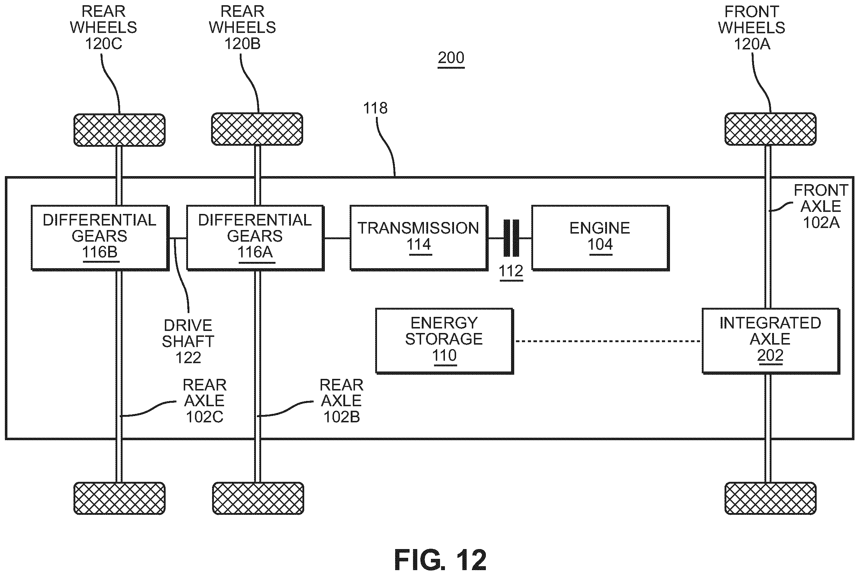

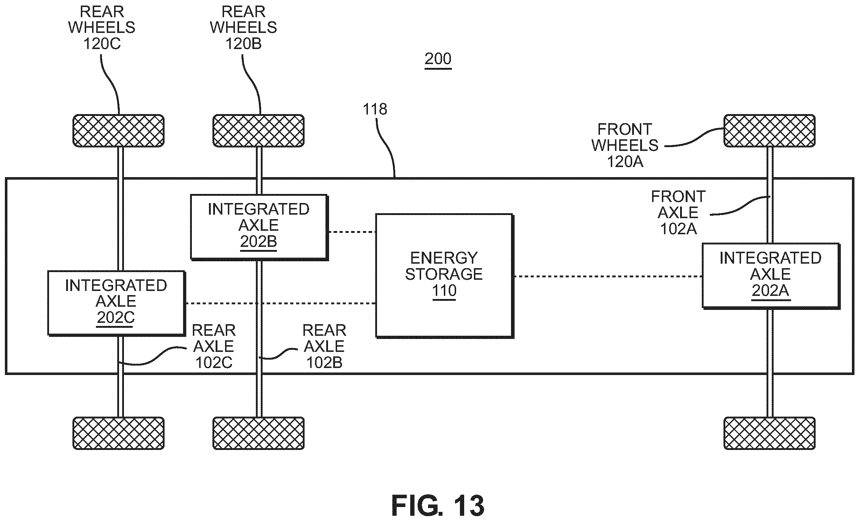

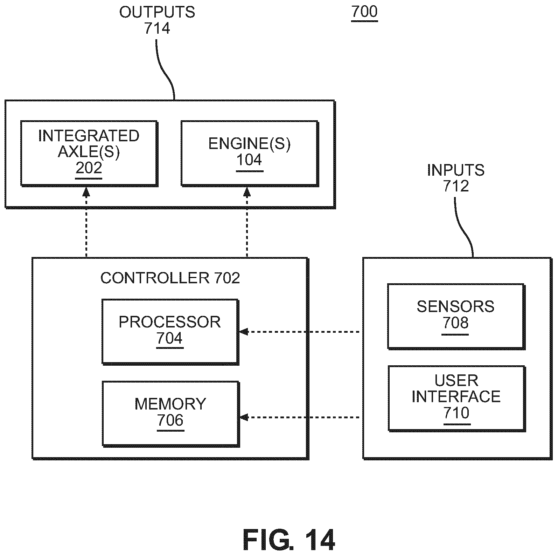

FIG. 8 is a schematic diagram of a dual-axle multi-mode adjustable hybrid vehicle system featuring an integrated front axle, showcasing how power can be dynamically managed between axles to enhance performance and energy efficiency. FIG. 9 is a schematic diagram of an integrated axle, demonstrating a modular approach to vehicle drivetrain design that allows seamless integration of hybrid propulsion components. FIG. 10 illustrates another dual-axle multi-mode adjustable hybrid vehicle system with an integrated front axle, offering an alternative layout for optimizing torque distribution and regenerative braking capabilities. FIG. 11 is a schematic diagram of a three-axle multi-mode adjustable hybrid vehicle system with an integrated front axle, expanding the application of the dual-axle concept to larger vehicles requiring additional traction and stability control. FIG. 12 presents another variation of a three-axle multi-mode adjustable hybrid vehicle system with an integrated front axle, emphasizing scalability and adaptability to different powertrain requirements. FIG. 13 provides an additional example of a three-axle multi-mode adjustable hybrid vehicle system with an integrated front axle, further illustrating the range of possible configurations that can be implemented using the disclosed principles. FIG. 14 is a schematic diagram of a controller operatively coupled with other components of the system, highlighting the role of electronic control in managing power distribution, operational modes, and energy recovery within the hybrid vehicle system.

FIG. 8 shows an example of a multi-mode hybrid vehicle system 200 as disclosed herein. The system 200 includes multiple motive power sources to drive various axles. An integrated axle 202 is mechanically coupled with a steerable front axle 102A, enabling it to provide motive force to drive front wheels 120A using electrical energy supplied by an energy storage system 110. Meanwhile, the rear axle 102B is mechanically connected to differential gears 116, which in turn are coupled to a transmission 114 and an engine 104 through a clutch mechanism 112. As such, the rear axle 102B is driven by engine-generated power, functioning as another motive power source. For simplicity, certain auxiliary components, such as the inverters for the integrated axle 202 and the fuel reservoir 108 connected to the engine 104, are omitted from the figure.

As disclosed herein, an integrated axle refers to an electric axle drive system affixed to the wheels, enabling rotation via an embedded motor-generator unit. The integrated axle incorporates power electronics, such as an inverter, and may also include a cooling circuit, facilitating a compact and cost-efficient drivetrain design. These axles operate independently from combustion engines, solely relying on the motor-generator to provide mechanical power.

In some embodiments, the motor-generator unit of the integrated axle is mounted directly on the drive axle, reducing the need for additional components such as external wiring harnesses, mechanical couplings, and separate cooling circuits for the motor and power electronics. By minimizing interface points that may contribute to efficiency loss, the integrated axle design enhances overall drivetrain performance while reducing packaging constraints within the vehicle's chassis frame. Each integrated axle operates independently, meaning that it can function separately from other integrated axles or drivetrain components. Additionally, in some implementations, the integrated axle may include a two-speed or three-speed gearbox to optimize torque delivery across different speed ranges.

As depicted in FIG. 8, the integrated axle 202 is mechanically linked to drive axle 102, such as front axle 102A, to power the front wheels 120A. A controller (not shown) is electrically coupled to the integrated axle 202, coordinating activation and deactivation of various drivetrain components to achieve multiple drive modes. FIG. 9 provides additional details regarding the components of the integrated axle 202, including an electric motor-generator 300, a drive axle 302, and a transmission 304. Additional elements, such as the inverter and cooling system, may be incorporated as necessary. These components are designed to function independently from other drivetrain elements, ensuring modular operation. The integrated axle 202 is housed within a common enclosure 204, providing mechanical support and protection for internal components.

FIG. 10 presents a dual-axle configuration, where the system 200 integrates two independent integrated axles 202A and 202B, installed on both the front axle 102A and the rear axle 102B, respectively. Both integrated axles are powered by the shared energy storage system 110 and are controlled via a centralized vehicle controller. Each integrated axle operates separately as an individual power source, but they may also function simultaneously, depending on vehicle operating conditions and energy demand.

FIGS. 11 through 13 illustrate three-axle implementations of system 200, demonstrating variations in power source distribution among multiple axles. These configurations expand the functionality of the dual-axle system to accommodate vehicles requiring additional traction and load-bearing capacity.

FIG. 11 depicts a system 200 with three axles (102A, 102B, and 102C), where two of the axles (front axle 102A and rear axle 102C) incorporate integrated axles 202A and 202B, respectively. The remaining axle, rear axle 102B, is powered by the engine 104, connected via clutch 112, transmission 114, and differential gears 116. The integrated axles 202A and 202B draw electrical power from energy storage system 110, operating independently or in coordination with the engine-powered rear axle based on system control inputs.

FIG. 12 introduces an alternative three-axle configuration, in which only the front axle 102A includes an integrated axle 202, while the two rear axles (102B and 102C) are connected via differential gears 116A and 116B. These differential gears are mechanically linked through a driveshaft 122, allowing both rear axles to be powered by engine-generated torque transferred through the transmission 114. This configuration is particularly useful for applications requiring mechanical drivetrain continuity across multiple axles, such as commercial trucks and heavy-duty vehicles.

FIG. 13 showcases a fully electric three-axle configuration, where all three axles (102A, 102B, and 102C) are powered by dedicated integrated axles 202A, 202B, and 202C, each independently controlled by a vehicle controller. This configuration maximizes electric propulsion efficiency, eliminating reliance on an internal combustion engine. In all disclosed embodiments, front axle 102A is consistently implemented with an integrated axle, while rear axles may incorporate either electric or engine-driven powertrains, depending on system design requirements.

FIG. 14 illustrates a control system 700 that governs the multi-mode hybrid vehicle system 200. The control system 700 includes a multi-axle system controller 702, which processes inputs 712 and generates outputs 714 to regulate system operation. The controller 702 features a processor 704 and a memory unit 706, which may be implemented using application-specific integrated circuits (ASICs), field-programmable gate arrays (FPGAs), microprocessors, or other processing architectures. The controller 702 communicates with integrated axles 202 and engine 104 via wired or wireless communication links.

The controller 702 can be configured as a standalone computing device or as part of a distributed processing system, capable of executing control algorithms stored in non-transitory machine-readable storage media. These algorithms process data received from sensors 708 and user interface 710, enabling real-time adjustments to power distribution, drivetrain engagement, and regenerative braking strategies. Sensor inputs may include vehicle weight distribution, terrain inclination, and external driving conditions, among other parameters. The controller 702 dynamically determines drivetrain engagement, adjusting system operation to optimize energy efficiency and performance under various driving conditions.

The control architecture supports various computing environments, including rack-mounted systems, onboard vehicle controllers, and embedded microprocessor configurations. Input and output devices can include graphical displays, touch interfaces, and voice recognition systems, enabling user interaction for system diagnostics and control adjustments. The control system may be integrated within local vehicle networks or operate over a broader network infrastructure, supporting cloud-based analytics, fleet management, and over-the-air software updates.

The computing framework underlying controller 702 is capable of executing software-defined control strategies, allowing for real-time adaptation of drivetrain modes. Software modules may be compiled as machine code or executed within virtualized environments, enabling flexibility in hardware deployment across different vehicle platforms. The controller 702's ability to process multi-source data inputs ensures that the hybrid vehicle system 200 operates efficiently and reliably, supporting multiple drivetrain configurations while maintaining operational consistency and safety.

The figures presented in this disclosure illustrate a comprehensive strategy for battery pack design and installation in commercial vehicles. The double L-shaped configuration maximizes space efficiency and modularity, while the multi-tiered stacking approach enhances energy density and thermal performance. By integrating these modular, side-installable designs, manufacturers can optimize battery capacity, facilitate easy maintenance, and improve vehicle integration. These innovations provide a scalable and serviceable solution for next-generation electrified commercial vehicles.

The following sections describe practical implementations of the battery pack apparatus, supporting systems, and associated methods disclosed herein. These implementations illustrate how the disclosed architectures, thermal management strategies, electrical integration techniques, and modular assembly processes can be applied in real-world applications such as electric vehicles, hybrid powertrains, and stationary energy storage solutions. The discussion is intended to provide an overview of key functional and structural aspects while maintaining a focus on system-level integration, performance optimization, and scalability.

It should be understood that certain fine details of implementation have been omitted from the following discussion and accompanying figures for the sake of brevity and clarity. As one skilled in the art would appreciate, the precise execution of the disclosed apparatus, systems, and methods may involve additional engineering considerations, material selections, manufacturing tolerances, and system-specific refinements that vary based on application requirements, regulatory compliance, and end-use constraints. The figures and descriptions provided focus on the fundamental design principles, high-level component relationships, and operational mechanisms, rather than exhaustive depictions of every individual element, connection, or manufacturing process.

Additionally, variations in hardware selection, control logic implementation, and auxiliary subsystem integration may be introduced to enhance performance, accommodate different vehicle architectures, or align with specific industry standards. These variations are within the scope of the disclosed innovations, as the core battery system configurations, cooling structures, and modular assembly methodologies can be adapted and optimized for different use cases while retaining the essential benefits of scalability, serviceability, and thermal efficiency.

In Example 1, a battery for an electrified vehicle, the battery having a casing for protecting internal components of the battery, the casing defining an outer profile of the battery with a plurality of battery legs including at least first and second battery legs where the second battery leg extends away from the first battery leg, wherein the outer profile is designed to fit within an installation design envelope defined within a battery bay of the electrified vehicle and share at least one common plane with a second, similar battery that is mirrored across a longitudinal midplane of the design envelope such that the first legs of both the battery and the second battery are arranged at opposite outboard sections of the design envelope.

In Example 2, the battery as Example 1 describes, wherein each of the battery and the second battery is removably installed in the design envelope.

In Example 3, the battery as either of Examples 1 or 2 describe, wherein the battery and the second battery share at least three common planes in the design envelope.

In Example 4, the battery as any of Examples 1-3 describe, wherein the battery is definable using a rectangular coordinate system including a first, transverse direction; a second, vertical direction; and a third, longitudinal direction; and wherein an extent of the second battery leg in the second, vertical direction is less than or equal to an extent of the first battery leg in the second, vertical direction.

In Example 5, the battery as any of Examples 1-4 describe, wherein the battery is definable using a rectangular coordinate system including a first, transverse direction; a second, vertical direction; and a third, longitudinal direction; and wherein an extent of the second battery leg in the third, longitudinal direction is less than or equal to an extent of the first battery leg in the third, longitudinal direction.

In Example 6, the battery as any of Examples 1-5 describe, further comprising one or more attachment features configured to connect the battery to the vehicle at a frame rail of the vehicle.

In Example 7, the battery as any of Examples 1-6 describe, wherein the second battery legs of both the battery and the second battery are complementarily arrangeable relative to each other such that the second battery legs of both the battery and the second battery are transversely juxtaposed to each other.

In Example 8, a battery system, comprising: the battery as any of Examples 1-7 describe and the second battery.

In Example 9, a method of installing the battery system as any of Examples 1-8 describe, the method comprising: accessing a first side of the battery bay to provide access to the design envelope, installing the battery at the first side of the battery bay, accessing a second side of the battery bay to provide access to the design envelope, and installing the second battery at the second side of the battery bay.

In Example 10, a method of installing the battery as any of Examples 1-9 describe, the method comprising: accessing the battery bay of the vehicle to provide access to the design envelope and installing the battery into the battery bay.

In Example 11, the battery as any of Examples 1-10 describe, further comprising a third leg that forms a stepped outer profile with at least one battery leg in the plurality of battery legs.

In Example 12, the battery as any of Examples 1-11 describe, wherein no portion of the plurality of battery legs occupies an inboard section of the design envelope.

In Example 13, the battery as any of Examples 1-12 describe, wherein the second battery legs of both the battery and the second battery are arrangeable relative to each other at an inboard section of the design envelope to occupy a portion of the inboard section.

In Example 14, a method of making a battery, the method comprising arranging a set of battery cells within a battery casing designed to protect internal components of the set of battery cells and to form an outer profile of the battery to include a plurality of battery legs that includes a first battery leg in a first orientation and a second battery leg that is in a second orientation that is different from the first orientation such that the casing is designed to have a complex shape that conforms to an installation design envelope defined within a battery bay of an energy storage system.

In Example 15, the method of making a battery as Example 14 describes, wherein arranging the set of battery cells includes configuring the cells in a longitudinal orientation, such that a long axes of the cells align parallel to a length of the energy storage system, thereby minimizing a width of the battery casing to fit within elongated spaces, such as along the frame rails of a vehicle.

In Example 16, the method of making a battery as either of Examples 14 or 15 describe, wherein arranging the set of battery cells includes configuring the cells in a transverse orientation, such that the long axes of the cells are perpendicular to a length of the energy storage system, thereby increasing the width of the battery casing for installation scenarios that require a shorter and wider form factor, such as for underfloor battery installations.

In Example 17, the method of making a battery as any of Examples 14-16 describe, further comprising stacking the set of battery cells in multiple tiers within the battery casing, the tiers being arranged vertically or horizontally, to optimize a height or volume of the battery casing to conform to dimensional constraints of the installation design envelope.

In Example 18, an energy storage system for an electrified vehicle, comprising: a battery bay defining an installation design envelope; and a plurality of batteries, each battery including: a casing designed to protect internal components of the battery, the casing defining an outer profile with a plurality of battery legs, including a first battery leg in a first orientation and a second battery leg in a second orientation different from the first orientation, wherein the second battery leg extends away from the first battery leg, and a set of battery cells arranged within the casing to form the outer profile, wherein the outer profiles of the plurality of batteries are configured to fit within the installation design envelope, and at least two of the batteries are mirrored across a longitudinal midplane of the installation design envelope such that the first battery legs of the mirrored batteries are positioned at opposite outboard sections of the installation design envelope.

In Example 19, the energy storage system as Example 18 describes, wherein the plurality of batteries is configured to share at least one common plane within the installation design envelope to maximize spatial efficiency.

In Example 20, the energy storage system as either of Examples 18 or 19 describe, wherein the installation design envelope is defined to conform to a space along frame rails of the electrified vehicle, and the mirrored arrangement of the batteries provides a balanced distribution of weight and capacity within the energy storage system.

While the discussion has primarily focused on L-shaped and double L-shaped battery configurations, the modular and scalable design principles disclosed herein can be readily adapted to U-shaped or other geometrically optimized configurations by one skilled in the art. The fundamental aspects of the disclosed tiered architecture, thermal management strategies, and electrical integration methodologies remain applicable regardless of the precise external shape of the battery pack. A U-shaped configuration, for example, may provide additional volumetric efficiency by allowing for greater battery capacity within a defined chassis space while maintaining balanced weight distribution along both sides of the vehicle frame. Similarly, configurations that incorporate asymmetrical or staggered cell arrangements may be used to optimize space utilization in irregularly shaped installation areas, such as those constrained by existing vehicle architecture, drivetrain components, or crash structures.

One skilled in the art, equipped with the disclosures and design considerations outlined herein, would recognize that the same principles of tiered stacking, cooling integration, and modular component assembly can be applied to non-L-shaped configurations with only minor modifications to structural enclosures and coolant routing. The open-frame system and modular cell stacking approach enable manufacturers to adjust the pack geometry to conform to different vehicle layouts without altering the underlying functionality of the battery system. As such, whether the pack is configured as L-shaped, U-shaped, or another optimized form factor, the disclosed systems and methods remain applicable, offering scalability, serviceability, and thermal efficiency across a wide range of battery-powered applications.

The examples discussed in the subsequent sections should therefore be viewed as illustrative implementations, rather than limiting definitions of the disclosed technology. Any modifications, enhancements, or refinements made to suit specific applications would be understood by those skilled in the art to be logical extensions of the principles presented herein.

The connecting lines shown in the various figures contained herein are intended to represent exemplary functional relationships and/or physical couplings between the various elements. It should be noted that many alternative or additional functional relationships or physical connections can be present in a practical system. However, the benefits, advantages, solutions to problems, and any elements that can cause any benefit, advantage, or solution to occur or become more pronounced are not to be construed as critical, required, or essential features or elements. The scope is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone can be present in an embodiment, B alone can be present in an embodiment, C alone can be present in an embodiment, or that any combination of the elements A, B or C can be present in a single embodiment; for example, A and B, A and C, B and C, or A and B and C.

In the detailed description herein, references to "one embodiment," "an embodiment," "an example embodiment," etc., indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art with the benefit of the present disclosure to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus.

While various embodiments of the disclosure have been shown and described, it is understood that these embodiments are not limited thereto. The embodiments may be changed, modified and further applied by those skilled in the art. Therefore, these embodiments are not limited to the detail shown and described previously, but also include all such changes and modifications.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

As used herein, when an element, component, device or layer is described as being "on" "connected to," "coupled to" or "in contact with" another element, component, device or layer, it can be directly on, directly connected to, directly coupled with, in direct contact with, or intervening elements, components, devices or layers may be on, connected, coupled or in contact with the particular element, component or layer, for example. When an element, component, device or layer for example is referred to as being "directly on," "directly connected to," "directly coupled to," or "directly in contact with" another element, component, device or layer, there are no intervening elements, components, devices or layers for example.

Although illustrative methods may be represented by one or more drawings (e.g., flow diagrams, communication flows, etc.), the drawings should not be interpreted as implying any requirement of, or particular order among or between, various steps disclosed herein. However, certain some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," "series" or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

## Claims

1. A battery for an electrified vehicle, the battery having a casing for protecting internal components of the battery, the casing defining an outer profile of the battery with a plurality of battery legs including at least first and second battery legs where the second battery leg extends away from the first battery leg, wherein the outer profile is designed to fit within an installation design envelope defined within a battery bay of the electrified vehicle and share at least one common plane with a second, similar battery that is mirrored across a longitudinal midplane of the design envelope such that the first legs of both the battery and the second battery are arranged at opposite outboard sections of the design envelope.

2. The battery of claim 1, wherein each of the battery and the second battery is removably installed in the design envelope and, optionally, wherein the battery and the second battery share at least three common planes in the design envelope.

3. The battery of any one of the preceding claims, wherein the battery is definable using a rectangular coordinate system including a first, transverse direction; a second, vertical direction; and a third, longitudinal direction; and wherein either
an extent of the second battery leg in the second, vertical direction is less than or equal to an extent of the first battery leg in the second, vertical direction, or
an extent of the second battery leg in the third, longitudinal direction is less than or equal to an extent of the first battery leg in the third, longitudinal direction.

4. The battery of any one of the preceding claims, further comprising one or more attachment features configured to connect the battery to the vehicle at a frame rail of the vehicle.

5. The battery of any one of the preceding claims, wherein the second battery legs of both the battery and the second battery are complementarily arrangeable relative to each other such that the second battery legs of both the battery and the second battery are transversely juxtaposed to each other.

6. A battery system, comprising: the battery of any one of the preceding claims and the second battery.

7. A method of installing the battery system of claim 6, the method comprising:
accessing a first side of the battery bay to provide access to the design envelope,
installing the battery at the first side of the battery bay,
accessing a second side of the battery bay to provide access to the design envelope, and
installing the second battery at the second side of the battery bay.

8. The battery of claim 6, wherein the second battery legs of both the battery and the second battery are arrangeable relative to each other at an inboard section of the design envelope to occupy a portion of the inboard section.

9. The battery of any one of claims 1 to 5, further comprising a third leg that forms a stepped outer profile with at least one battery leg in the plurality of battery legs and, optionally, no portion of the plurality of battery legs occupies an inboard section of the design envelope.

10. A method of making a battery, the method comprising arranging a set of battery cells within a battery casing designed to protect internal components of the set of battery cells and to form an outer profile of the battery to include a plurality of battery legs that includes a first battery leg in a first orientation and a second battery leg that is in a second orientation that is different from the first orientation such that the casing is designed to have a complex shape that conforms to an installation design envelope defined within a battery bay of an energy storage system.

11. The method of making a battery of claim 10, wherein arranging the set of battery cells includes configuring the cells in a longitudinal orientation, such that a long axes of the cells align parallel to a length of the energy storage system, thereby minimizing a width of the battery casing to fit within elongated spaces, such as along the frame rails of a vehicle.

12. The method of making a battery of any one of claims 10 and 11, wherein arranging the set of battery cells includes configuring the cells in a transverse orientation, such that the long axes of the cells are perpendicular to a length of the energy storage system, thereby increasing the width of the battery casing for installation scenarios that require a shorter and wider form factor, such as for underfloor battery installations.

13. The method of making a battery of any one of claims 10 and 12, further comprising stacking the set of battery cells in multiple tiers within the battery casing, the tiers being arranged vertically or horizontally, to optimize a height or volume of the battery casing to conform to dimensional constraints of the installation design envelope.

14. An energy storage system for an electrified vehicle, comprising:
a battery bay defining an installation design envelope; and
a plurality of batteries, each battery in the plurality of batteries being made according to the method of any one of claims 10 and 13,
wherein the outer profiles of the plurality of batteries are configured to fit within the installation design envelope, and at least two of the batteries are mirrored across a longitudinal midplane of the installation design envelope such that the first battery legs of the mirrored batteries are positioned at opposite outboard sections of the installation design envelope.

15. The energy storage system of claim 14, wherein the plurality of batteries is configured to share at least one common plane within the installation design envelope to maximize spatial efficiency and, optionally, the installation design envelope is defined to conform to a space along frame rails of the electrified vehicle, and the mirrored arrangement of the batteries provides a balanced distribution of weight and capacity within the energy storage system.
